# EUROPÄISCHE PATENTSCHRIFT

(11) **EP 0 634 577 B1**
(45) Veröffentlichungstag und Bekanntmachung des Hinweises auf die Patenterteilung: **18.12.1996**
(21) Anmeldenummer: 94110181.8
(22) Anmeldetag: 30.06.1994
(51) Int. Cl.: F15B 13/042, F16K 27/02

(54) **2-Wege-Einbauventil als Sitzventil**
Two-way cartridge valve as seat valve
Soupape à siège à deux voies sous forme de cartouche

(30) Priorität: 16.07.1993 LU 88384
(43) Veröffentlichungstag der Anmeldung: 18.01.1995
(73) Patentinhaber: HYDROLUX S.A.R.L., 1112 Luxembourg (LU)
(72) Erfinder: Bourkel, Arsène, L-4460 Belvaux (LU); Lanfermann, Bernd, D-46459 Rees (DE); Tratberger, Karl, D-47229 Duisburg (DE); Post, Karl-Heinz, D-41564 Kaarst (DE)
(74) Vertreter: Freylinger, Ernest T.

(56) Entgegenhaltungen:
- DE-A- 3 619 927
- DE-C- 3 741 521
- ÖLHYDRAULIK UND PNEUMATIK, Bd.22, Nr.6, Juni 1978, MAINZ, DE; Seiten 337 - 341 D.G. FELDMANN: 'Systematik des Aufbaus von Steuerungen mit 2-Wege-Einbauventilen'
- MACHINE DESIGN, Bd.52, Nr.28, 11. Dezember 1980, CLEVELAND, US Seiten 41 - 44 D.C. DOWNS: 'Cartridge check valves: new option for hydraulic control'
- ENERGIE FLUIDE, Bd.25, Nr.2, 25. März 1986, PARIS, FR; Seiten 41 - 44 B. MOUGEOT: 'Distributeurs hydrauliques à clapet piloté à la fermeture'

## Beschreibung

Die Erfindung betrifft ein Zwei-Wege-Einbauventil als Sitzventil.
Zwei-Wege-Einbauventile, auch Cartridge-Ventile genannt, werden seit zirka 30 Jahren im grossen Umfang in der hydraulischen Steuertechnik als Druck-, Wege- oder Sperrventile eingesetzt. Solche Cartridge-Ventile sind zum Beispiel in "Machine Design", Band 52, Nr. 28, vom 11. Dezember 1980, Cleveland USA, Seiten 143-147, in dem Artikel "Cartridge check valves: New option for hydraulic control" von David C. Downs, eingehend beschrieben. Ein Zwei-Wege-Einbauventil in Sitzbauweise wird ebenfalls in der Offenlegungsschrift DE-A-36 19 927 beschrieben.
Ein solches klassisches Zwei-Wege-Einbauventil in Sitzbauweise (oder Cartridge-Ventil) umfasst:
a) eine Ventilhülse zum Einsatz in einen Steuerblock, mit
   einem ersten Querschnittsbereich am ersten Ende der Ventilhülse, zum axial abgedichteten Einpassen in eine erste Bohrungstufe einer Stufenbohrung des Steuerblocks, wobei diese erste Bohrungsstufe mit einem ersten Hauptstromanschluss im Steuerblock verbunden ist,
   einem zweiten Querschnittsbereich der Ventilhülse, zum axial abgedichteten Einpassen in eine zweite Bohrungsstufe grösseren Durchmessers dieser Stufenbohrung,
   einem mittleren Querschnittsbereich, zwischen dem ersten und zweiten Querschnittsbereich der Ventilhülse, zum Abgrenzen einer Ringkammer innerhalb der zweiten Bohrungsstufe, wobei die zweite Bohrungsstufe innerhalb dieser Ringkammer mit einem zweiten Hauptstromanschluss im Steuerblock verbunden ist,
   einer axialen Hauptstrombohrung welche in dem ersten Ende der Ventilhülse eine erste Hauptstromöffnung ausbildet,
   mindestens einer seitlichen zweiten Hauptstromöffnung im mittleren Querschnittsbereich der Ventilhülse, zum Verbinden der Hauptstrombohrung mit der Ringkammer, und
   einem Ventilsitz in der Hauptstrombohrung zwischen den ersten und der zweiten Hauptstromöffnungen,
b) einen Ventilkolben mit einem ersten und einem zweiten Ende, der axial verschiebbar in die Ventilhülse eingepasst ist und an seinem ersten Ende einen, dem Ventilsitz zugeordneten, Verschlusskegel ausbildet,
c) eine Schliessfeder welche dem Ventilkolben derart zugeordnet ist, dass sie auf diesen in Richtung des Ventilsitzes eine Schliesskraft ausübt, und
d) einen Ventildeckel.

Zwecks Austauschbarkeit dieser Zwei-Wege-Einbauventile sind die Durchmesser und Tiefen der Stufenbohrung, die Lage des seitlichen zweiten Hauptstromanschlusses im Steuerblock, sowie die Abmessungen des Ventildeckels, mit der Lage seiner Befestigungsschrauben und seiner Steueranschlüsse, für die verschiedenen Ventilnenngrössen in Normen festgelegt. In Deutschland ist dies z.B. der Fall in der DIN 24342. Dadurch ist im wesentlichen die Aussenkontur der Ventilhülse vorgegeben, und es verbleiben dem Fachmann wenig Möglichkeiten das Ventil an verschiedene Funktionen anzupassen.

Die dem Stand der Technik entsprechenden Ventile weisen eine zylindrische Führungsbohrung auf, welche sich vom Ventilsitz axial durch die Ventilhülse zum zweiten Ende der Ventilhülse erstreckt. In diese Führungsbohrung der Ventilhülse ist der Ventilkolben axial verschiebbar eingepasst. Eine Steuerkammer wird innerhalb dieser Führungsbohrung durch das zweite Ende des Ventilkolbens axial abgegrenzt. In dieser Steuerkammer bildet das zweite Ende des Ventilkolbens demnach eine Steuerfläche aus, deren druckwirksame Fläche SX dem Querschnitt der Führungsbohrung entspricht.

Durch die erforderliche Mindestwandstärke der Ventilhülse in ihrem mittleren Querschnittsbereich und den erforderlichen freien Querschnitt der Ringkammer im Bereich der zweiten Hauptstromöffnungen, ergibt sich der grösstmögliche Querschnitt dieser Führungsbohrung. Damit ist gleichfalls die grösstmögliche Steuerfläche SX, der grösstmögliche Querschnitt des Ventilkolbens und somit der grösstmögliche freie Querschnitt SA des Ventilsitzes festgelegt. Dieser freie Querschnitt SA des Ventilsitzes muss natürlich kleiner als der Querschnitt des Verschlusskegels sein, der wiederum nicht grösser als der Querschnitt der Führungsbohrung sein kann.

In der Praxis werden diese Zwei-Wege-Ventile mit grösstmöglichem freien Querschnitt SA des Ventilsitzes als Druckventile eingesetzt und weisen somit eine maximale Durchflusskapazität auf. Die Steuerfläche SX, welche durch den Querschnitt der Führungsbohrung festgelegt ist, entspricht dabei ungefähr dem freien Querschnitt SA des Ventilsitzes, was für die meisten Druckventilfunktionen auch erwünscht ist.

Werden Zwei-Wege-Ventile der vorbeschriebenen Art jedoch als vorgesteuerte Zwei/Zwei-Wegeventile, für Schaltfunktionen eingesetzt, ist in den meisten Fällen der grösstmögliche freie Querschnitt des Ventilsitzes um etwa 35-50% verkleinert, um die auf den Ventilkolben in Öffnungsrichtung wirkende hydrostatische Kraft zu verkleinern und das Schaltverhalten des Ventils so weit als möglich unabhängig von Druckschwankungen im ersten Hauptstromanschluss zu machen. Dies bedingt natürlich, dass die Durchflusskapazität des Ventils ebenfalls um etwa 35-50% reduziert wird respektiv, dass ein erhöhter Druckverlust im Ventil in Kauf genommen wird.

Der Erfindung liegt die Aufgabe zugrunde, ein Zwei-Wege-Einbauventil der eingangs beschriebenen Art zu schaffen das für den Einsatz als Zwei/Zwei-Wegeventil für Schaltfunktionen bestens geeignet ist und sich durch eine hohe Durchflusskapazität auszeichnet.

Diese Aufgabe wird erfindungsgemäss dadurch gelöst: dass die Ventilhülse eine stufenförmige Führungsbohrung für den Ventilkolben aufweist, wobei eine erste Stufe der Führungsbohrung sich im mittleren Querschnittsbereich vom Ventilsitz in Richtung des zweiten Endes der Ventilhülse erstreckt und dabei den grösstmöglichen Querschnitt in diesem Bereich aufweist, und wobei eine zweite Stufe der Führungsbohrung sich im wesentlichen innerhalb des zweiten Querschnittsbereichs der Ventilhülse erstreckt und dabei einen grösseren Querschnitt als die erste Stufe der Führungsbohrung aufweist,
dass der Ventilkolben an seinem zweiten Ende einen Kolbenansatz aufweist der die zweite Stufe der Führungsbohrung axial in eine stirnseitige erste und eine ringförmige zweite Steuerkammer unterteilt,
dass ein erster Verbindungskanal durch die Ventilhülse die ringförmige zweite Steuerkammer mit der Ringkammer verbindet,
dass der freie Querschnitt des Ventilsitzes und der axialen Hauptstrombohrung ungefähr dem Querschnitt der ersten Stufe der Führungsbohrung entsprechen.

Wird das erfindungsgemässe Ventil als Zwei/Zwei-Wegeventil zum hydraulisch gesteuerten Unterbrechen, respektiv Freigeben des Durchflusses einer Hydraulikflüssigkeit zwischen dem ersten und dem zweiten Hauptstromanschluss eingesetzt, ist die zweite ringförmige Steuerkammer über den ersten Verbindungskanal und die Ringkammer, mit dem niedrigeren Druck pB im zweiten Hauptstromanschluss beaufschlagt. Wird die erste Steuerkammer jetzt mit einem Steuerdruck pX beaufschlagt, der dem Druck pA im ersten Hauptstromanschluss ungefähr entspricht, ergibt sich durch den grösseren Querschnitt der ersten Steuerkammer eine hydrostatische Schliesskraft, welche die Schliesskraft der Schliessfeder vorteilhaft ergänzt. Der maximale Querschnitt der zweiten Stufe der Führungsbohrung wird dabei natürlich durch die Mindestwandstärke der Ventilhülse in ihrem zweiten Querschittsbereich, welcher in die zweite Bohrungsstufe axial abgedichtet eingepasst wird, festgelegt. In den meisten Fällen kann der Querschnitt der zweiten Stufe der Führungsbohrung um zirka 100%, in Bezug auf die erste Stufe der Führungsbohrung, vergrössert werden.

Die erste Stufe der Führungsbohrung, die sich bis zum Ventilsitz erstreckt, weist dagegen erfindungsgemäss den grösstmöglichen Querschnitt auf, der im mittleren Querschnittsbereich der Ventilhülse untergebracht werden kann. Dieser ist einerseits durch die Mindestwandstärke der Ventilhülse in diesem Bereich und anderseits durch den erforderlichen freien Querschnitt der Ringkammer bestimmt. Dadurch, dass der freie Querschnitt des Ventilsitzes und der Hauptstrombohrung dann erfindungsgemäss ungefähr dem Querschnitt der ersten Stufe der Führungsbohrung entsprechen, wird eine optimale Durchflusskapazität für das Ventil erreicht.

Das erfindungsgemässe Ventil ist somit einerseits durch die zusätzliche hydrostatische Schliesskraft in geschlossener Schaltstellung und andererseits durch die niedrigen Druckverluste in offener Schaltstellung ausgezeichnet für eine Anwendung als vorgesteuertes Zwei/Zwei-Wegeventil für Schaltfunktionen geeignet.

In einer ersten vorteilhaften Ausgestaltung des erfindungsgemässen Ventils ist eine Düse in den ersten Verbindungskanal eingesetzt. Durch diese Düse lassen sich die Schliess- und Öffnungsbewegung des Ventilkolbens beeinflussen; was bei Ventilen dieser Art, entsprechend dem Stand der Technik, ausschiesslich durch Einsetzen einer Düse in eine Steuerölbohrung im Ventildeckel möglich war.

In einer zweiten vorteilhaften Ausgestaltung weisst das Ventil einen zweiten Verbindungskanal auf, der sich durch den Kolbenansatz zwischen der ersten und zweiten Steuerkammer erstreckt.

Das Ventil kann damit in einer ersten Anwendung, durch einfaches Verschliessen des ersten Verbindungskanals als vorgesteuertes Druckventil eingesetzt werden, wobei die in Schliessrichtung wirkende Netto-Steuerfläche ungefähr dem freien Querschnitt des Ventilsitzes entspricht. Durch zusätzlichen Einsatz einer Düse in den zweiten Verbindungskanal wird das dynamische Verhalten des Ventils als Druckventil in den meisten Fällen sehr vorteilhaft beeinflusst.

In dieser zweiten Ausgestaltung kann das Ventil in einer zweiten Anwendung auch als Rückschlagventil eingesetzt werden. Dabei sind sowohl der erste als auch der zweite Verbindungskanal unverschlossen, so dass ein anstehender höherer Druck im zweiten Hauptstromkanal das Ventil sperrt.

In einer dritten vorteilhaften Ausgestaltung des erfindungsgemässen Ventils ist ein dritter Verbindungskanal vorgesehen. Dieser dritte Verbindungskanal befindet sich im ersten Ende des Ventilkolbens und mündet mit einem Ende in die erste Stirnfläche des Ventilkolbens und mit dem anderen Ende in die zweite Steuerkammer. Durch Verschliessen des zweiten Verbindungskanals kann dann das erfindungsgemässe Ventil durch einen höheren Druck pB im zweiten Hauptstromanschluss gegen den anstehenden niedrigeren Druck pA im ersten Hauptstromanschluss und die Schliesskraft der Schliessfeder geöffnet werden.

Für das erfingungsgemässe Ventil bestehen dementsprechend viele Anwendungsmöglichkeiten von denen hier nur einige aufgezählt worden sind. Die optimale Anpassung des erfingungsgemässen Ventils an diese vielseitigen Funktionen erfolgt dabei ohne kostenrespektiv arbeitsintensive Änderungen an der Ventilhülse oder am Ventilkolben.

Der Kolbenansatz am zweiten Ventilende erbringt ebenfalls einen beachtenswerten konstruktiven Vorteil. Wird nähmich der Ventilkolben axial aufgebohrt um eine Federkammer zur Aufnahme der Schliessfeder zu schaffen, ist die Wandstärke des Ventilkolbens im Bereich des Ansatzkolbens weitaus grösser als im Bereich des restlichen Ventilkolbens. Damit kann im Ansatzkolben eine relativ tiefe Ringnut für ein Dichtungselement vorgesehen werden.

Dieses Dichtungselement kann zum Beispiel aus einem O-Ring und einem "Glydring" bestehen, welche beide in dieser Ringnut angeordnet sind. Eine derartige Dichtringkombination hat sich durch eine ausgezeichnete Dichtheit und eine hohe Lebensdauer bewährt. Sie war jedoch bis jetzt, wegen der zu geringen Wandstärke des Ventilkolbens, nicht bei den in der Einleitung beschriebenen Ventilen einsatzbar.

Der Stand der Technik und Ausführungsbeispiele der Erfindung werden anhand der beigefügten Zeichnungen zum besseren Verständnis der Erfindung näher beschrieben.

Es zeigen:
- Figur 1 und 2 je einen Schnitt durch ein Zwei-Wege-Einbauventil als Sitzventil entsprechend dem Stand der Technik,
- Figur 3 eine erste vorteilhafte Ausführung des erfindungsgemässen Zwei-Wege-Einbauventils,
- Figur 4 eine zweite vorteilhafte Ausführung des erfindungsgemässen Zwei-Wege-Einbauventils.

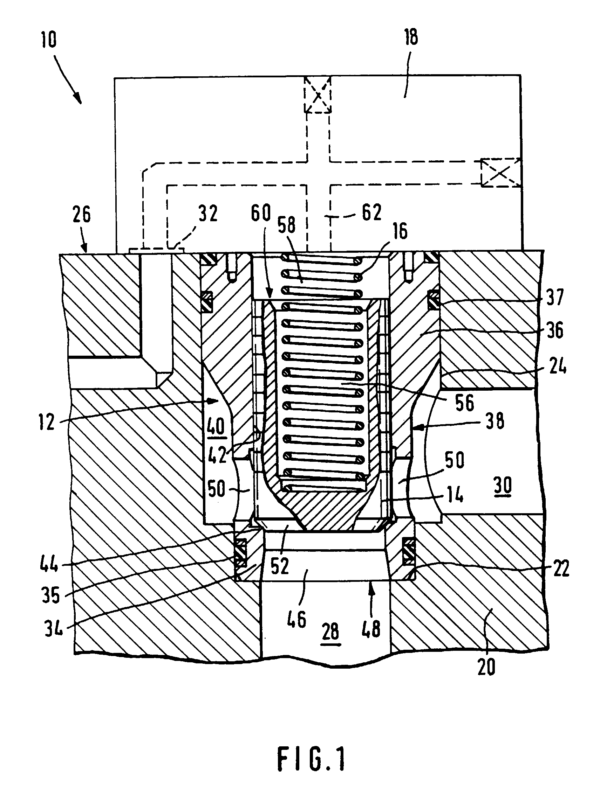

Die Figur 1 zeigt den typischen Aufbau eines Zwei-Wege-Einbauventils 10 als Sitzventil entsprechend dem Stand der Technik. Das Ventil 10 umfasst im wesentlichen eine Ventilhülse 12, einen Ventilkolben 14, eine Schliessfeder 16 und einen Ventildeckel 18. Die Ventilhülse 12 ist in einen Steuerblock 20 eingebaut, der zu diesem Zweck eine Stufenbohrung mit einer ersten Bohrungsstufe 22 und einer zweiten Bohrungsstufe 24 aufweist. Die zweite Bohrungsstufe 24, die in eine Anschlussoberfläche 26 des Steuerblocks 20 mündet, hat dabei einen grösseren Durchmesser als die erste Bohrungsstufe 22.

Ein erster Hauptstromanschluss 28 für eine Hydraulikflüssigkeit mündet im Steuerblock 20 koaxial in die erste Bohrungsstufe 22. Ein zweiter Hauptstromanschluss 30 mündet im Steuerblock 20 seitlich in die zweite Bohrungsstufe 24. Der Ventildeckel 18 wird auf der Anschlussoberfläche 26, z.B. mit nicht gezeigten Befestigungsschrauben, befestigt und kann einen oder mehrere Steuerölanschlüsse 32 aufweisen.

Um die Austauschbarkeit dieser vielseitig eingesetzten Zwei-Wege-Ventile zu gewährleisten, sind in einigen Ländern, respektiv bei einigen grossen Anwendern, die Durchmesser und Tiefen der beiden Bohrungsstufen 22 und 24, die Masse und Lage des Ventildeckels 18, sowie die Lage seiner Befestigungsschrauben, die Lage der Steuerölanschlüsse 32 im Ventildeckel 18, die Lage des seitlichen zweiten Hauptstromanschlusses 30, in Funktion der Nennweite des Ventils genormt. In Deutschland ist dies z.B. der Fall in der DIN 24342.

Durch Vorgabe der Durchmesser und Tiefen der beiden Bohrungsstufen 22 und 24, sowie durch die Festlegung der Lage des seitlichen zweiten Hauptstromanschlusses 30, ist damit die äussere Form der Ventilhülse 12 weitgehend festgelegt und kann nicht weiter verändert werden. Die Ventilhülse 12 muss demnach einen ersten Querschnittbereich 34 am ihrem ersten Ende aufweisen, der dem Durchmesser der ersten Bohrungsstufe 22 entspricht und somit, axial abgedichtet durch ein oder mehrere erste Dichtelemente 35, in diese erste Bohrungsstufe 22 einpassbar ist. Sie muss weiterhin einen zweiten Querschnittsbereich 36 aufweisen, der dem Durchmesser der zweiten Bohrungsstufe 24 entspricht und somit, axial abgedichtet durch ein oder mehrere zweite Dichtelemente 37, in diese zweite Bohrungsstufe 24 einpassbar ist. Dieser erste und zweite Querschnittsbereich 34 und 36 der Ventilhülse 12 sind durch einen mittleren Querschnittsbereich 38 verbunden. Dieser ist so gestaltet, dass er innerhalb der zweiten Bohrungsstufe 24 eine die Ventilhülse umgebende Ringkammer 40 abgrenzt. Die Ringkammer 40 wird somit axial an einem Ende durch den ersten äusseren Querschnittsbereich 34, in der ersten Bohrungsstufe 22, und am anderen Ende durch den zweiten äusseren Querschnittsbereich 36, in der zweiten Bohrungsstufe 24, abgegrenzt.

In dem Ventil 10 weist die Ventilhülse 12 eine axiale Führungsbohrung 42 auf, die sich vom zweiten Ende der Ventilhülse 12 bis zu einem Ventilsitz 44 erstreckt. In diese Führungsbohrung 42 der Ventilhülse 12 ist der zylindrische Ventilkolben 14 zwischen dem Ventilsitz 44 und dem Ventildeckel 18 axial verschiebbar eingepasst. Direkt unterhalb der Sitzfläche 44 weist die Ventilhülse 12 einen axialen Hauptstromkanal 46 auf, der stirnseitig im ersten Ende der Ventilhülse eine axiale erste Hauptstromöffnung 48 ausbildet. In ihrem mittleren Querschnittsbereich 38 weist die Ventilhülse 12 oberhalb des Ventilsitzes 44, dagegen mehrere seitliche, zweite Hauptstromöffnungen 50 zum Verbinden des Hauptstromkanals 48 mit der Ringkammer 40 auf.

Der zylindrische Ventilkolben 14 bildet stirnseitig an seinem ersten Ende einen, dem Ventilsitz 44 zugeordneten, Verschlusskegel 52 aus. Die Schliessfeder 16 übt auf den Ventilkolben 14 eine Schliesskraft in Richtung des Ventilsitzes 44 aus. Sie ist in eine innere axiale Federkammer 56 des Ventilkolbens 14 eingesetzt und stützt sich mit ihrem freien Ende auf den Ventildeckel 18 ab.

Ein Steuerölraum 58 wird innerhalb der Führungsbohrung 42 durch das zweite Ende des Ventilkolbens 14 axial abgegrenzt. Der Ventilkolben 14 weist demnach eine Steuerfläche 60 auf, die dem Querschnitt der Führungsbohrung 42 entspricht. Der Steuerölraum 58 ist über eine Steuerölbohrung 62 im Ventildeckel 18 mit dem Steuerölanschluss 32 verbunden.

In der Ausführungsform nach Figur 1 entsprechen der freie Querschnitt des Ventilsitzes 44 und des axialen Hauptstromkanals 46 ungefähr der Steuerfläche 60 des Ventilkolbens 14 im Steuerraum 58. Diese Ausführungsform ist z.B. typisch für eine Anwendung des Zwei-Wege-Ventils als Druckventil. Der Druckverlust der Hydraulikflüssigkeit im Ventil ist durch einen grösstmöglichen Querschnitt des Ventilsitzes 44 reduziert.

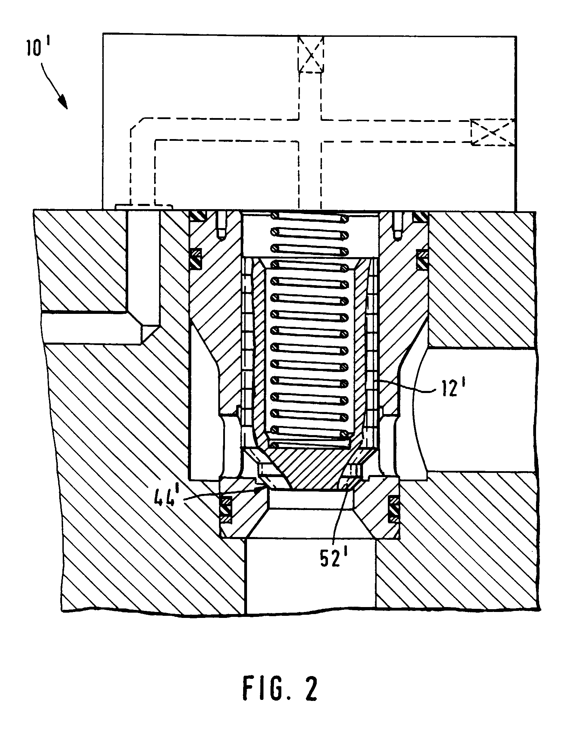

Wird das Zwei-Wege-Ventil 10 nach Figur 1 jedoch als vorgesteuertes Zwei/Zwei-Wegeventil für Schaltfunktionen angewandt, wirkt sich der, durch den grossen freien Querschnitt des Ventilsitzes 44 bedingte, grosse Querschnitt des Verschlusskegels 52, negativ auf das Verhalten des Ventils aus. Entsprechend dem Stand der Technik, verwendet man deshalb für Schaltfunktionen eine Ausführungsform nach Figur 2. Dieses Ventil 10' unterscheidet sich von dem Ventil 10 nach Figur 1 einzig und allein dadurch, dass der freie Querschnitt des Ventilsitzes 44' um zirka 40% verkleinert wurde und dass der Verschlusskegel 52' des Ventilkolbens 12' entsprechend angepasst wurde. Durch diese Verkleinerung des freien Querschnitts des Ventilsitzes 44' wird das Schliessverhalten des Ventils bei einem Einsatz als Zwei/2-Wegeventil für Schaltfunktionen wesentlich verbessert.

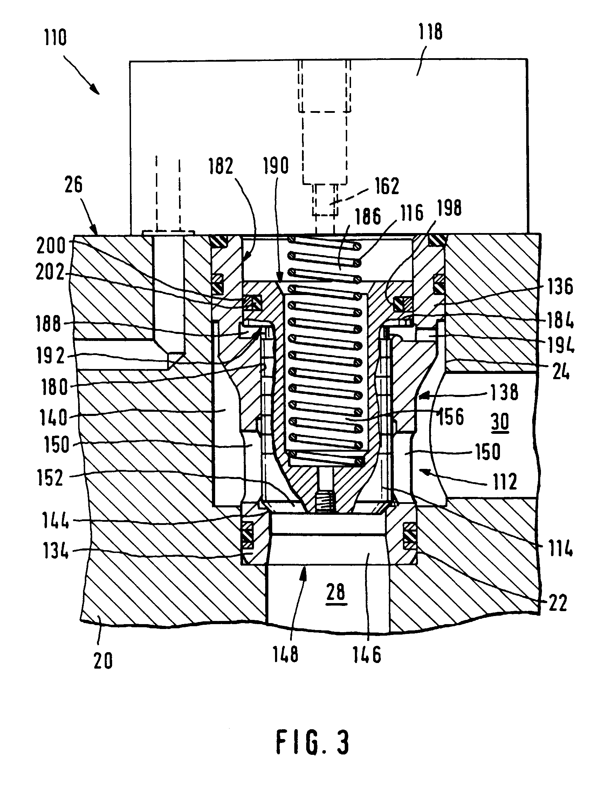

Figur 3 zeigt eine erste vorteilhafte Ausführung eines Zwei-Wege-Ventils 110 entsprechend der Erfindung. Dieses Zwei-Wege-Ventil 110 ist in den Steuerblock 20 der Figur 1 eingesetzt, welcher hier nicht mehr näher beschrieben wird. Wie das Zwei-Wege-Ventil 10 der Figur 1, weist das Ventil 110 eine Ventilhülse 112, einen Ventilkolben 114, eine Schliessfeder 116 und einen Ventildeckel 118 auf.

Die Ventilhülse 112 weist einen ersten Querschnittsbereich 134, einen zweiten Querschnittsbereich 136 und einen mittleren Querschnittsbereich 138 auf, die mit den entsprechenden Bereichen 34, 36 und 38 der Ventilhülse 12 struktur- und funktionsmässig übereinstimmen und daher nicht näher beschrieben werden. Wie in Figur 1 wird durch den mittleren Querschnittsbereich 138 in der zweiten Bohrungsstufe 24 des Steuerblocks 20 eine Ringkammer 140 abgetrennt. Eine axiale erste Hauptstromöffnung 148 befindet sich stirnseitig im ersten Ende der Ventilhülse 110. Seitliche Hauptstromöffnungen 150 sind umfangmässig im mittleren Querschnittsbereich 138 der Ventilhülse 110 derart angeordnet, dass sie eine Verbindung zur Ringkammer 140 mit einem möglichst grossem freien Querschnitt ergeben. Innerhalb der Ventilhülse 110 wird die erste axiale Hauptstromöffnung 148 durch einen axialen Hauptstromkanal 146 verlängert. Ein Ventilsitz 144 befindet sich im Hauptstromkanal 146 zwischen der axialen ersten Hauptstromöffnung 148 und der seitlichen zweiten Hauptstromöffnungen 150.

Eine erste Führungsbohrung 180 für den Ventilkolben 114 erstreckt sich im mittleren Querschnittsbereich 138 von dem Ventilsitz 144 aus in Richtung des zweiten Endes der Ventilhülse 112. In diese erste Führungsbohrung 180 münden die seitlichen zweiten Hauptstromöffnungen 150 ein, und ein erstes zylindrische Ende des Ventilkolbens 114 ist darin axial verschiebbar geführt. Dieses erste Ende des Ventilkolbens 114 weist stirnseitig einen Verschlusskegel 152 auf, der dem Ventilsitz 144 angepasst ist.

Betreffend die Dimensionierung dieses unteren Teils der Ventilhülse 112, respektiv des Ventilkolbens 114, bleibt folgendes anzumerken. Dieser Teil ist so gestaltet, dass die Druckverluste beim Durchströmen des offenen Ventils 110 möglichst gering sind. Diese Druckverluste werden einerseits durch den freien Querschnitt der Ringkammer 140, besonders im Bereich der seitlichen zweiten Hauptstromöffnungen 150, anderseits durch den freien Querschnitt des Ventilsitzes 144, respektiv des Hauptstromkanals 146 beeinflusst. Um den Druckverlust in der Ringkammer 140 zu reduzieren ist der äussere Durchmesser der Ventilhülse 114 im Bereich der seitlichen zweiten Hauptstromöffnungen 150 annähernd gleich dem Durchmesser der ersten Bohrungsstufe 22. In diesem Bereich ist der freie ringförmige Querschnitt der Ringkammer 140 somit gleich der Differenz zwischen dem Querschnitt der ersten und zweiten Bohrungsstufe 22 und 24. Durch die erforderliche Mindestwandstärke der Ventilhülse 112 in diesem Bereich der ersten Führungsbohrung 180, ergibt sich der grösstmögliche Querschnitt des Ventilkolbens 114, respektiv des Verschlusskegels 152, und somit der maximale freie Querschnitt des Ventilsitzes 144.

Ein wesentlicher Unterschied zwischen der bekannten Ventilausführung nach Figur 1 und der neuen Ventilausführung nach Figur 3 besteht darin, dass die Ventilhülse 112 eine stufenförmige, den abgestuften Querschnittsbereichen 134, 136, 138 angepasste, innere Führungsbohrung für den Ventilkolben 114 aufweist. Eine zweite Führungsbohrung 182 erstreckt sich nämlich im wesentlichen innerhalb des zweiten Querschnittsbereichs 136 der Ventilhülse und weist dabei einen grösseren Querschnitt als die erste Führungsbohrung 180 auf. In der Ausführung nach Figur 3 kann diese zweite Führungsbohrung 182 z.B. einen zirka 60% - 100% grösseren Querschnitt als die erste Führungsbohrung 180 aufweisen. Die grösstmögliche Querschnittserweiterung wird dabei durch die Mindestwandstärke der Ventilhülse 112 in ihrem zweiten Querschnittsbereichs 136 festgelegt. An einem Ende wird diese zweite Führungsbohrung 182 durch den Ventildeckel 118 axial abgegrenzt und abgedichtet, am anderen Ende efolgt die Abdichtung durch das erste zylindrische Ende des Ventilkolbens 114 in der ersten Führungsbohrung 180.

An seinem zweiten Ende weist der Ventilkolben 114 einen Kolbenansatz 184 auf. Dieser Kolbenansatz 184 ist axial verschiebbar in die zweite Führungsbohrung 182 eingepasst und unterteilt dieselbe axial in eine stirnseitige erste und eine ringförmige zweite Steuerkammer 186 und 188. Er weist folglich stirnseitig eine erste Steuerfläche 190 auf, deren Flächeninhalt dem Querschnitt der zweiten Führungsbohrung 182 entspricht und die damit zirka 60% - 100% grösser als die entgegengesetzte Stirnfläche des Ventilkolbens 114 ist. Eine zweite ringförmige und entgegengesetzt wirkende Steuerfläche 192 bildet der Kolbenansatz 184 in der zweiten Steuerkammer 188 aus. Der Flächeninhalt dieser zweiten, ringförmigen Steuerfläche 192 enspricht der Flächendifferenz zwischen dem Querschnitt der ersten und der zweiten Führungsbohrung 180 und 182. Über einen ersten Verbindungskanal 194 durch die Wand der Ventilhülse 112 ist die erste Steuerkammer 186 mit der Ringkammer 140 verbunden.

Das Ventil 110 nach Figur 3 ist vorteilhaft als vorgesteuertes Zwei/Zwei-Wegeventil für Schaltfunktionen einsetzbar. Die erste Steuerkammer 186 wird über die Steuerölbohrung 162 mit dem Steuerdruck pX beaufschlagt. In Schliessstellung des Ventils 110 wird die ringförmige zweite Steuerkammer 188 über die erste Verbindungsbohrung 194 mit dem Druck pB des zweiten Hauptstromanschlusses 30 belastet.

Bei einer Querschnittsvergrösserung der zweiten Führungsbohrung 182 um zirka 60% - 100% relativ zum Querschnitt der ersten Führungsbohrung 180, ist die auf den Ventilkolben wirkende hydrostatische Schliesskraft, bei gleichem Steuerdruck pX, grösser als die hydrostatische Schliesskraft im Ventil der Figur 1. Ist der zweite Hauptstromanschluss 30 z.B. drucklos entlastet, so ist die auf den Ventilkolben wirkende hydrostatische Schliesskraft, bei gleichem Steuerdruck pX, um 1,6- bis 2-mal grösser als die hydrostatische Schliesskraft im Ventil der Figur 1. Um in Schliesstellung die gleiche hydrostatische Schliesskraft bei gleichem Steuerdruck pX in einem Ventil nach Figur 2 zu erzeugen, müsste man dagegen, durch den verkleinerten freien Querschnitt des Ventilsitzes 44', einen um mindestens 40% höheren Druckverlust bei offenem Ventil 10' hinnehmen.

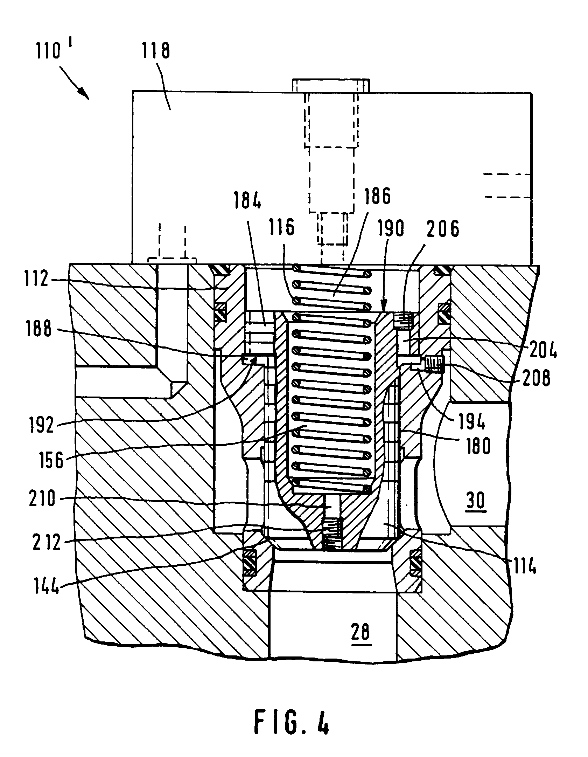

Der erste Verbindungskanal 194 ist vorteilhaft eine Bohrung die so gestaltet ist, dass eine Düse 196 eingesetzt werden kann ( sie wird z.B. in ein Innengewinde der Bohrung eingeschraubt). Durch diese Düse wird der Durchfluss in dem ersten Verbindungskanal 194 gedrosselt, wodurch die Öffnungs- und Schliessbewegungen des Ventilkolbens 114 gebremst werden. Eine Beeinflussung der Öffnungs- und Schliessbewegungen des Ventilkolbens 14 oder 14' ist beim Ventil der Figur 1 oder 2 in dieser Form nicht möglich. Hier kann eine Düse ausschliesslich in die Steuerbohrung 62 im Deckel 18 eingebaut werden. Damit lassen sich die Bewegungen des Ventilkolbens 14, 14' jedoch nur begrenzt verlangsamen, da in der Praxis, um ein Zusetzens durch Schmutzpartikel zu verhindern, eine minimale Düsenbohrung vorgegeben ist. In den Ventilen nach Figur 3 und 4 wird dagegen die Wirkung einer Düse in der Steuerbohrung 162 vorteilhaft durch die Wirkung der Düse im ersten Verbindungskanal 194 ergänzt.

Ähnlich wie in Figur 1 weist der Ventilkolben 114 in Figur 3 eine axiale Federkammer 156 zur Aufnahme der Schliessfeder 116 auf, welche sich mit ihrem zweiten Ende auf den Ventildeckel 118 abstützt. Ein weiterer Vorteil des Ventils entsprechend Figur 3 ergibt sich dabei durch eine vergrösserte Wandstärke des Ventilkolbens 114 zu der inneren Federkammer 156 im Bereich des Kolbenansatzes 184. In dieser vergrösserten Wandstärke kann mindestens eine Ringnut 198 grösserer Tiefe vorgesehen werden, ohne kritische Querschnittsschwächungen zur inneren Federkammer 156 in Kauf nehmen zu müssen. In dieser Ringnut können dann auch bewährte Dichtungselemente mit grösserer Einbautiefe (z.B. eine Dichtringkombination bestehend aus einem inneren O-Ring 202 und einem äusseren, den O-Ring 202 schützenden Gleitring 200) eingesetzt werden. Bei dem Ventil nach Figur 1 und 2 ist wegen der geringen Wandstärke ausschliesslich der Einbau eines einfachen O-Ringes in eine Ringnut geringer Tiefe möglich. Diese Lösung hat sich jedoch wegen der unbefriedigenden Lebensdauer des O-Ringes, bedingt durch die dynamische Belastungen des Ventilkolbens 14, 14' nicht bewährt.

Soll das erfindungsgemässe Ventil sowohl als vorgesteuertes Zwei/Zwei-Wege-Ventil wie auch als Druckventil eingesetzt werden, so ist vorteilhaft die Ausführung nach Figur 4 zu wählen. Diese Ausführung unterscheidet sich von der Ausführung nach Figur 3 durch einen zweiten Verbindungskanal 204, welcher sich im Kolbenansatz 184 zwischen der ersten und zweiten Steuerfläche 190 und 192 erstreckt. Dieser zweite Verbindungskanal 204 ist mit einem Stopfen, z.B. einem Einschraubstopfen 206 verschliessbar. Mit diesem Einschraubstopfen 206 im zweiten Verbindungskanal 204 unterscheidet sich das Ventil der Figur 4 funktionsmässig nicht von dem Ventil der Figur 3 und ist als Wegeventil einsetzbar. Wird dagegen der Einschraubstopfen 206 in dem zweiten Verbindungskanal 204 entfernt und der erste Verbindungskanal 194 durch einen Stopfen, z.B. einen Einschraubstopfen 208 verschlossen, so ist die in Schliessrichtung wirkende Netto-Steuerfläche des Ventils 110' ungefähr gleich dem freien Querschnitt des Ventilsitzes 144. Die zweite Steuerkammer 188 ist jetzt nämlich mit der ersten Steuerkammer 186 verbunden und die ringförmige zweite Steuerfläche 192 kann von der stirnseitigen ersten Steuerfläche 190 abgezogen werden, womit die verbleibende, wirksame Steuerfläche dem Querschnitt der ersten Führungsbohrung 180 entspricht. Das Ventil weist damit die für viele vorgesteuerte Druckventilfunktionen gewünschte Flächengleichheit zwischen dem freien Querschnitt des Ventilsitzes 144 und der wirksamen Steuerfläche auf.

Zusätzlich kann dann in die zweite Verbindungsbohrung 204 eine Dämpfungsdüse zur Dämpfung der Bewegungen des Ventilkolbens und zur Vermeidung von Schwingungen beim Ansprechen des Ventils eingesetzt werden. Der Einbau einer Dämpfungsdüse in den Steuerölanschluss des Ventildeckels 118 führt nämlich in vielen Anwendungsfällen nicht zu dem gewünschten Erfolg.

Durch Verwendung eines Ventildeckels ohne Steuerölanschluss (nicht gezeigt) lässt sich das Ventil 110' der Figur 4 als Sperrventil, z.B. als Rückschlagventil einsetzen. Sind die erste und zweite Verbindungsbohrung 194 und 204 nicht durch einen Stopfen verschlossen, bildet das Ventil ein Rückschlagventil mit freiem Durchfluss vom ersten Hauptstromanschluss 28 zum zweiten Hauptstromanschluss 30, während in Gegenrichtung der Durchfluss, durch die Schliessfeder 116 und den hydrostatischen Druck in der ersten Steuerkammer 186, gesperrt ist.

Ist im Ventilkolben 114 an seinem ersten Ende stirnseitig ein dritter Verbindungskanal 210 vorgesehen, lassen sich Durchflussrichtung und Sperrichtung des Ventils nach Figur 4 leicht umkehren. Dieser dritte Verbindungskanal 210 erstreckt sich, wie aus Figur 4 ersichtlich, zwischen dem Federraum 156 und der ersten Stirnfläche des Ventilkolbens 114 und verbindet somit den ersten Hauptstromanschluss 28 bei geschlossenem Ventil mit der ersten Steuerkammer 186. Der erste und dritte Verbindungkanal 194 und 210 sind geöffnet, der zweite Verbindungskanal 204 ist durch den Einschraubstopfen 206 verschlossen. Steht im ersten Hauptstromanschluss 28 ein höherer Druck als im zweiten Hauptstromanschluss 30 an, sperrt dieser höhere Druck über die erste Steuerfläche 190 in Zusammenarbeit mit der Schliessfeder 116 das Ventil. Fällt der Druck im ersten Hauptstromanschluss 28 wesentlich unter den Druck des zweiten Hauptstromanschlusses 30, öffnet der Druck im zweiten Hauptstromanschluss 30 über die ringförmige zweite Steuerfläche 192 das Ventil und gibt es für einen freien Durchfluss der Hydraulikflüssigkeit vom zweiten Hauptstromanschluss 30 zum ersten Hauptstromanschluss 28 frei.

Auch der dritte Verbindungskanal 210 ist mit einem Stopfen (z.B. einem Einschraubstopfen 212) verschliessbar.

Das in Figur 4 dargestellte Ventil ist also ohne wesentlichen Umänderungsaufwand äusserst vielseitig einsetzbar und lässt sich dabei vorteilhaft auf die verschiedenen Ventilfunktionen abstimmen.

## Patentansprüche

1. Zwei-Wege-Einbauventil als Sitzventil umfassend
a) eine Ventilhülse (112) zum Einsatz in einen Steuerblock (20) mit
einem ersten und einem zweiten Ende,
einem ersten Querschnittsbereich (134) am ersten Ende der Ventilhülse (112), zum axial abgedichteten Einpassen in eine erste Bohrungsstufe (22) einer Stufenbohrung des Steuerblocks (20), wobei diese erste Bohrungsstufe (22) mit einem ersten Hauptstromanschluss (28) im Steuerblock (20) verbunden ist,
einem zweiten Querschnittsbereich (136) der Ventilhülse (112), zum axial abgedichteten Einpassen in eine zweite Bohrungsstufe (24) grösseren Durchmessers dieser Stufenbohrung,
einem mittleren Querschnittsbereich (138), zwischen dem ersten und zweiten Querschnittsbereich (134 und 136) der Ventilhülse (112), zum Abgrenzen einer Ringkammer (140) innerhalb der zweiten Bohrungsstufe (24), wobei die zweite Bohrungsstufe (24) innerhalb dieser Ringkammer (140) mit einem zweiten Hauptstromanschluss (30) im Steuerblock (20) verbunden ist,
einer axialen Hauptstrombohrung (146) welche in dem ersten Ende der Ventilhülse (112) eine erste Hauptstromöffnung (148) ausbildet,
mindestens einer seitlichen zweiten Hauptstromöffnung (150) im mittleren Querschnittsbereich (138) der Ventilhülse (112), zum Verbinden der Hauptstrombohrung (146) mit der Ringkammer (140), und
einem Ventilsitz (144) in der Hauptstrombohrung (146) zwischen der ersten und der zweiten Hauptstromöffnung (148 und 150),
b) einen Ventilkolben (114) mit einem ersten und einem zweiten Ende, der axial verschiebbar in die Ventilhülse (112) eingepasst ist und stirnseitig an seinem ersten Ende einen, dem Ventilsitz (144) zugeordneten, Verschlusskegel (152) ausbildet,
c) eine Schliessfeder (116), welche dem Ventilkolben (114) derart zugeordnet ist, dass sie auf diesen in Richtung des Ventilsitzes (144) eine Schliesskraft ausübt, und
d) einen Ventildeckel (118),
**dadurch gekennzeichnet,**
dass die Ventilhülse (112) eine stufenförmige Führungsbohrung (180, 182) für den Ventilkolben (114) aufweist, wobei eine erste Stufe (180) der Führungsbohrung sich im mittleren Querschnittsbereich (138) vom Ventilsitz (144) in Richtung des zweiten Endes der Ventilhülse (112) erstreckt und dabei den grösstmöglichen Querschnitt in diesem Bereich aufweist, und wobei eine zweite Stufe (182) der Führungsbohrung sich im wesentlichen innerhalb des zweiten Querschnittsbereichs (136) der Ventilhülse (112) erstreckt und dabei einen grösseren Querschnitt als die erste Stufe (180) der Führungsbohrung aufweist,
dass der Ventilkolben (114) an seinem zweiten Ende einen Kolbenansatz (184) aufweist, der die zweite Stufe (182) der Führungsbohrung axial in eine stirnseitige erste und eine ringförmige zweite Steuerkammer (186 und 188) unterteilt, dass ein erster Verbindungskanal (194) durch die Ventilhülse (112) die ringförmige zweite Steuerkammer (188) mit der Ringkammer (140) verbindet,
dass der freie Querschnitt des Ventilsitzes (144) und der axialen Hauptstrombohrung (146) ungefähr dem Querschnitt der ersten Stufe (180) der Führungsbohrung entsprechen.

2. Zwei-Wege-Einbauventil nach Anspruch 1 gekennzeichnet durch eine Düse die in den ersten Verbindungskanal (194) eingesetzt ist.

3. Zwei-Wege-Einbauventil nach Anspruch 1 gekennzeichnet durch einen zweiten Verbindungskanal (204), der sich im Kolbenansatz (184) zwischen der ersten und zweiten Steuerkammer (186 und 188) erstreckt.

4. Zwei-Wege-Einbauventil nach Anspruch 3 gekennzeichnet durch einen Stopfen (208), der in den ersten Verbindungskanal (194) eingesetzt ist.

5. Zwei-Wege-Einbauventil nach Anspruch 4 gekennzeichnet durch eine Düse, die in den zweiten Verbindungskanal (204) eingesetzt ist.

6. Zwei-Wege-Einbauventil nach Anspruch 3 gekennzeichnet durch einen dritten Verbindungskanal (210) der stirnseitig im ersten Ende des Ventilkolbens (114) eine Mündung ausbildet und diese durch den Ventilkolben (114) mit der ersten Steuerkammer (186) verbindet.

7. Zwei-Wege-Einbauventil nach Anspruch 6 dadurch gekennzeichnet dass der erste, zweite und dritte Verbindungskanal (194, 204 und 210) ein Innengewinde zum Einschrauben von Einschraubstopfen, respektiv Einschraubdüsen aufweisen.

8. Zwei-Wege-Einbauventil nach einem der Ansprüche 1 bis 7 gekennzeichnet durch eine Federkammer (156) die axial im Ventilkolben (114) angeordnet ist und eine Ringnut(198) für ein Dichtungselement im Kolbenansatz (184).

9. Zwei-Wege-Einbauventil nach Anspruch 8 gekennzeichnet durch eine Dichtringkombination bestehend aus einem inneren O-Ring (202) und einem äusseren Gleitring (200) die in der Ringnut (198) des Kolbenansatzes (184) angeordnet sind.

## Claims

1. Two-way cartridge valve as a seat valve comprising
a) a valve casing (112) for insertion in a control block (20) with
a first and a second end,
a first cross-section area (134) at the first end of the valve casing (112) for axially sealed fitting into a first bore stage (22) of a stepped bore in the control block (20), this first bore stage (22) being connected to a first main flow port (28) in the control block (20),
a second cross-section area (136) of the valve casing (112) for axially sealed fitting into a second bore stage (24) of larger diameter in this stepped bore,
a central cross-section area (138) between the first and second cross-section areas (134 and 136) of the valve casing (112) for delimiting an annular chamber (140) within the second bore stage (24), the second bore stage (24) being connected within this annular chamber (140) to a second main flow port (30) in the control block (20),
an axial main flow bore (146), which forms in the first end of the valve casing (112) a first main flow opening (148),
at least one lateral second main flow opening (150) in the central cross-section area (138) of the valve casing (112) for connection of the main flow bore (146) to the annular chamber (140), and
a valve seat (144) in the main flow bore (146) between the first and second main flow openings (148 and 150),
b) a valve piston (114) with a first and second end, which is fitted into the valve casing (112) with axial movement and at the front forms at its first end a closing cone (152) assigned to the valve seat (144),
c) a closing spring (116), which is assigned to the valve piston (114) in such a way that it exerts a closing force on the latter in the direction of the valve seat (144), and
d) a valve cover (118),
**characterised in that**
the valve casing (112) has a stepped guide bore (180, 182) for the valve piston (114), a first stage (180) of the guide bore extending in the central cross-section area (138) from the valve seat (144) in the direction of the second end of the valve casing (112) and having the largest possible cross-section in this area, and a second stage (182) of the guide bore extending essentially within the second cross-section area (136) of the valve casing (112) and having a larger cross-section than the first stage (180) of the guide bore,
the valve piston (114) has at its second end a piston extension (184), which divides the second stage (182) of the guide bore axially into a front first and an annular second control chamber (186 and 188),
a first connecting duct (194) connects the annular second control chamber (188) to the annular chamber (140) through the valve casing (112),
the free cross-sections of the valve seat (144) and of the axial main flow bore (146) correspond approximately to the cross-section of the first stage (180) of the guide bore.

2. Two-way cartridge valve according to claim 1 characterised by a nozzle, which is inserted in the first connecting duct (194).

3. Two-way cartridge valve according to claim 1, characterised by a second connecting duct (204), which extends between the first and second control chambers (186 and 188) in the piston extension (184).

4. Two-way cartridge valve according to claim 3, characterised by a plug (208), which is inserted in the first connecting duct (194).

5. Two-way cartridge valve according to claim 4, characterised by a nozzle, which is inserted in the second connecting duct (204).

6. Two-way cartridge valve according to claim 3, characterised by a third connecting duct (210), which at the front forms in the first end of the valve piston (114) an orifice and connects this to the first control chamber (186) through the valve piston (114).

7. Two-way cartridge valve according to claim 6, characterised in that the first, second and third connecting ducts (194, 204 and 210) have an internal thread for screwing in screw-in plugs or screw-in nozzles.

8. Two-way cartridge valve according to one of claims 1 to 7, characterised by a spring chamber (156), which is arranged axially in the valve piston (114) and an annular groove (198) for a sealing element in the piston extension (184).

9. Two-way cartridge valve according to claim 8, characterised by a sealing ring combination consisting of an inner O-ring (202) and an outer sliding ring (200), which are arranged in the annular groove (198) of the piston extension (184).

## Revendications

1. Soupape à siège à deux voies sous forme de cartouche, comprenant
a) une douille de soupape (112) destinée à être placée dans un bloc de distribution (20), avec
une première et une deuxième extrémité,
une première section transversale (134) à la première extrémité de la douille de soupape (112), destinée à être emboîtée de manière axialement étanche dans un premier étage d'alésage (22) d'un alésage étagé du bloc de distribution (20), ledit premier étage d'alésage (22) étant relié à un premier raccordement de courant principal (28) prévu dans le bloc de distribution (20),
une deuxième section transversale (136) de la douille de soupape (112), destinée à être emboîtée de manière axialement étanche dans un deuxième étage d'alésage (24) de diamètre supérieur dudit alésage étagé,
une section transversale centrale (138), entre la première et la deuxième section transversale (134 et 136) de la douille de soupape (112), destinée à délimiter une chambre annulaire (140) à l'intérieur du deuxième étage d'alésage (24), le deuxième étage d'alésage (24) étant relié à l'intérieur de ladite chambre annulaire (140) à un deuxième raccordement de courant principal (30) prévu dans le bloc de distribution (20),
un alésage de débit principal axial (146) formant dans la première extrémité de la douille de soupape (112) un premier orifice de débit principal (148),
au moins un deuxième orifice de débit principal latéral (150) dans la section transversale centrale (138) de la douille de soupape (112), destiné à relier l'alésage de débit principal (146) à la chambre annulaire (140), et
un siège de soupape (144) dans l'alésage de débit principal (146), entre le premier et le deuxième orifice de débit principal (148 et 150),
b) un piston de soupape (114) avec une première et une deuxième extrémité, qui est encastré dans la douille de soupape (112) de manière à permettre un déplacement axial et qui forme sur la face de sa première extrémité un cône d'obturation (152) affecté au siège de soupape (144),
c) un ressort de fermeture (116) affecté au piston de soupape (114) de manière à exercer sur celui-ci une force de fermeture en direction du siège de soupape (144), et
d) un couvercle de soupape (118),
caractérisée en ce que la douille de soupape (112) comporte un alésage de guidage étagé (180, 182) destiné au piston de soupape (114), un premier étage (180) de l'alésage de guidage qui s'étend dans la section transversale centrale (138), depuis le siège de soupape (114) en direction de la deuxième extrémité de la douille de soupape (112), et présentant dans cette partie la plus grande section possible, et un deuxième étage (182) de l'alésage de guidage qui s'étend substantiellement à l'intérieur de la deuxième section transversale (136) de la douille de soupape (112) et présentant une section supérieure à celle du premier étage (180) de l'alésage de guidage, en ce que le piston de soupape (114) comporte à sa deuxième extrémité un prolongement de piston (184) qui divise le deuxième étage (182) de l'alésage de guidage axialement en une première chambre de commande frontale et une deuxième chambre de commande annulaire (186 et 188), en ce qu'un premier canal de liaison (194) à travers la douille de soupape (112) relie la deuxième chambre de commande annulaire (188) à la chambre annulaire (140), en ce que la section libre du siège de soupape (144) et de l'alésage de débit principal axial (146) correspond sensiblement à la section du premier étage (180) de l'alésage de guidage.

2. Soupape à siège à deux voies selon la revendication 1, caractérisée par une tuyère placée dans le premier canal de liaison (194).

3. Soupape à siège à deux voies selon la revendication 1, caractérisée par un deuxième canal de liaison (204) qui s'étend dans le prolongement de piston (184) entre la première et la deuxième chambre de commande (186 et 188).

4. Soupape à siège à deux voies selon la revendication 3, caractérisée par un bouchon (208) placé dans le premier canal de liaison (194).

5. Soupape à siège à deux voies selon la revendication 4, caractérisée par une tuyère placée dans le deuxième canal de liaison (204).

6. Soupape à siège à deux voies selon la revendication 3, caractérisée par un troisième canal de liaison (210) formant sur la face frontale, dans la première extrémité du piston de soupape (114) une ouverture et reliant celle-ci, à travers le piston de soupape (114), à la première chambre de commande (186).

7. Soupape à siège à deux voies selon la revendication 6, caractérisée en ce que le premier, le deuxième et le troisième canal de liaison (194, 204 et 210) présentent un taraudage pour visser des bouchons à vis respectivement des tuyères à vis.

8. Soupape à siège à deux voies selon l'une quelconque des revendications 1 à 7, caractérisée par une chambre à ressort (156) disposée axialement dans le piston de soupape (114) et une rainure annulaire (198) pour un élément d'étanchéité dans le prolongement de piston (184).

9. Soupape à siège à deux voies selon la revendication 8, caractérisée par une combinaison d'anneaux d'étanchéité composée d'un anneau torique intérieur (202) et d'un anneau glissant extérieur (200) qui sont disposés dans la rainure annulaire (198) du prolongement de piston (184).
